# EUROPEAN PATENT APPLICATION

(11) **EP 3 091 197 A1**
(43) Date of publication of application: **09.11.2016**
(21) Application number: 15166804.3
(22) Date of filing: 07.05.2015
(51) Int. Cl.: F01D 21/12, F01D 21/00, F02C 9/18, F01D 25/10, F01D 11/24, F01D 21/14

(54) **METHOD FOR CONTROLLING THE TEMPERATURE OF A GAS TURBINE DURING A SHUTDOWN**

(71) Applicant: General Electric Technology GmbH, 5400 Baden (CH)
(72) Inventor: Pereti, Michele, 5400 Baden (CH); Mohr, Wolfgang Franz Dietrich, 8166 Niederweningen (CH); Zagorskiy, Alexander, 5430 Wettingen (CH); Agostinelli, Gian Luigi, 8048 Zürich (CH)
(74) Representative: Bernotti, Andrea

(57) **Abstract**

The method for controlling the temperature of a gas turbine (1) during a shutdown comprises withdrawing gas from the gas turbine (1), heating the gas, supplying the gas back into the gas turbine (1), monitoring the temperature of at least a reference location within the gas turbine (1), controlling at least a gas feature according to the measured temperature.

## Description

### TECHNICAL FIELD

The present invention relates to a method for controlling the temperature of a gas turbine during a shutdown. The gas turbine is preferably the gas turbine of a power plant for electric power generation or oil&gas application or industrial application.

### BACKGROUND

Gas turbines, e.g. gas turbines of power plants, during operation undergo a number of starts up and shuts down to comply with the energy requirement of the electric grid they are connected to.

The starts up and shuts down cycles negatively impact the lifetime of a gas turbine; practically in order to measure the impact of the shuts down and starts up on the lifetime of a gas turbine, a parameter (e.g. the available lifetime but other parameters are possible) is taken as a reference and at each shut down and/or start up the parameter is reduced (e.g. the available lifetime is reduced of a given number of hours).

The conditions of the starts up and/or shut down are relevant when considering the impact on the gas turbine lifetime.

In fact, if the gas turbine is loaded slowly or the start up is carried out starting from an already hot gas turbine, the lifetime is affected less than in case of a quick loading or start up from a cold gas turbine.

For this reason it is useful to keep a gas turbine hot during a shut down, so that the following start up will affect the available lifetime of the gas turbine less than in case the gas turbine is allowed to cool down.

US 2010/0 189 551 discloses a method according to which as soon as a gas turbine is shut down, hot air is supplied through the gas turbine, in order to keep the gas turbine hot.

This method is demanding in terms of energy consumption.

### SUMMARY

An aspect of the invention includes providing a method that counteracts the cooling down of a gas turbine during shut down with a reduced energy consumption when compared to the prior art.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:
Figure 1 shows a gas turbine for implementing the method of the invention;
Figure 2 shows another gas turbine for implementing the method of the invention;
Figures 3 through 6 show parts of gas turbines for implementing the method of the invention.

### DETAILED DESCRIPTION OF EXEMPLARY EMBODIMENTS

In the following gas turbines that can be used to implement the method are described first.

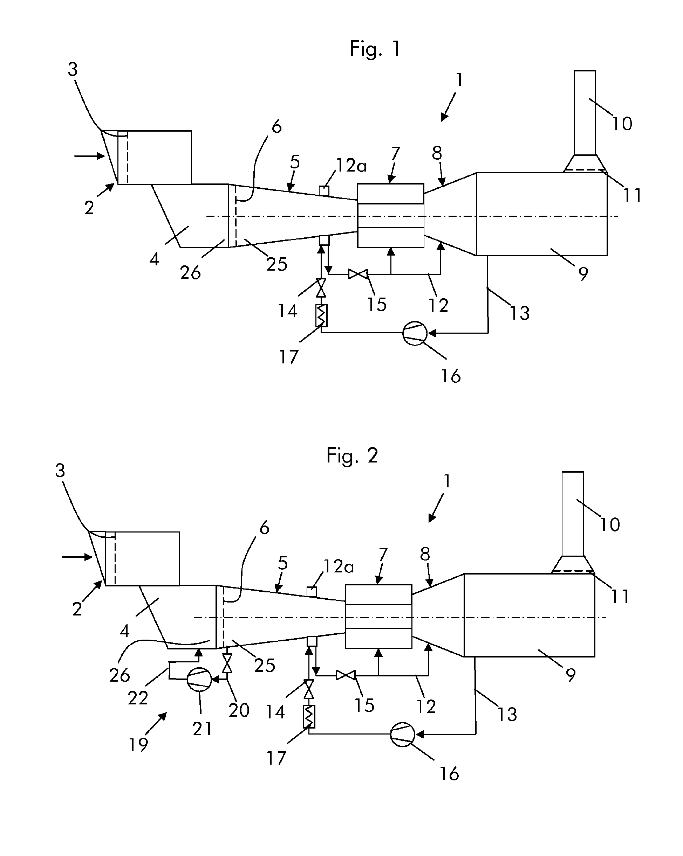

Figure 1 shows a gas turbine 1 having a filter 2 for air; the filter 2 can be provided with a shutter 3. The filter 2 is connected to an air intake 4 that supplies a compressor 5 typically provided with variable inlet guide vanes 6. The compressor 5 is a multi stage compressor, each stage comprising static vanes and rotating blades. E.g. the compressor 5 can have up to ten or even more stages.

The compressor 5 is connected to a combustion chamber 7 that receives compressed air from the compressor 5 and is further fed with a fuel; in the combustion chamber 7 the fuel is combusted with compressed air from the compressor 5, generating hot gas that is expanded in a turbine 8.

The turbine 8 is connected to an exhaust duct (to remove the exhaust gas from the turbine) or a heat recovery steam generator (to evaporate water against the exhaust gas); the attached drawings show an exhaust duct 9; the exhaust duct 9 can comprise an exhaust diffuser. The exhaust duct 9 is connected to a stack 10 that can be provided with a shutter 11.

The gas turbine typically also has piping 12 for air extraction from the compressor 5, for cooling and/or sealing purpose. The piping 12 is usually connected to one or more extraction slots 12a provided around the compressor 5; the extraction slots 12a are typically provided at the last stages of the compressor 5; for last stages it is meant one or more of the last five stages of the compressor 5 and preferably one or more of the last three stages of the compressor 5.

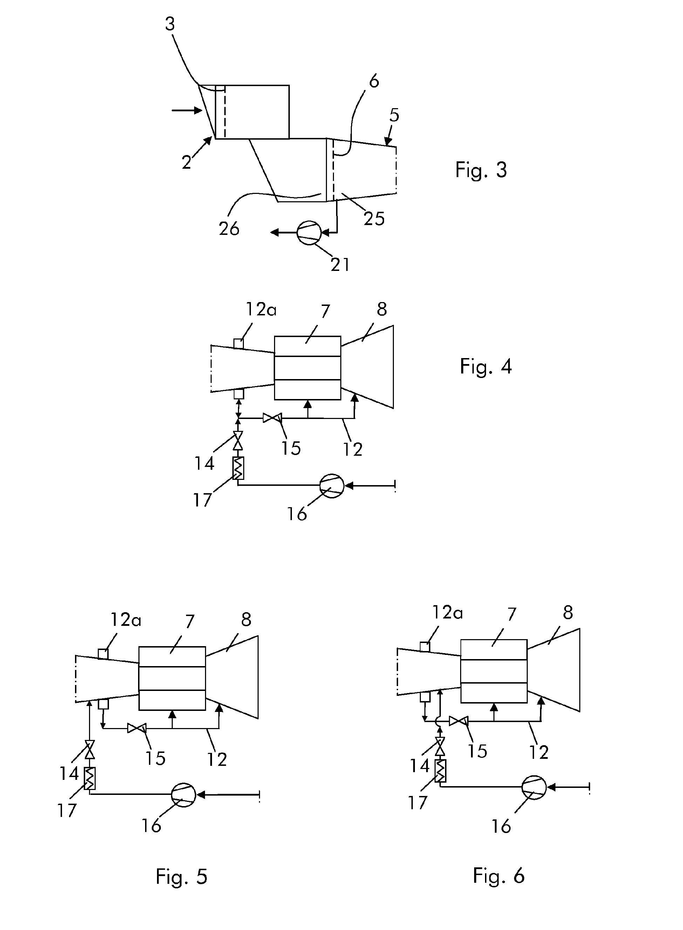

Further, the gas turbine 1 has piping 13 connected between the exhaust duct 9 or heat recovery steam generator and the compressor 5. A number of possibilities are available. The piping 13 can depart from the exhaust duct 9 and be connected to an extraction slot (figures 1, 2, 3) of the compressor 5 or to a dedicated opening or series of opening preferably extending circumferentially and/or axially (figures 5, 6). Further, the piping 13 can be connected to the piping 12 (figure 4); in this case valves 14, 15 are provided in order to drive the gas flow.

In addition or as an alternative, the piping 13 can also depart from the combustion chamber 7 and/or compressor 5 and can also be connected to the combustion chamber 7 and/or turbine 8. Therefore a number of embodiments are possible, such as (wherein departing indicates the part of the gas turbine from which the gas is extracted):
- piping 13 departing from the turbine 8 and connected to the compressor 5 and/or combustion chamber 7 and/or turbine 8,
- piping 13 departing from the combustion chamber 7 and connected to the compressor 5 and/or combustion chamber 7 and/or turbine 8,
- piping 13 departing from the compressor 5 and connected to the compressor 5 and/or combustion chamber 7 and/or turbine 8.

The piping 13 is provided with an air blower or fan or compressor 16 and/or a heater 17; the heater 17 can be a heat exchanger and/or an electric heater and/or any other of heater.

Figure 2 shows another embodiment of the gas turbine 1; the gas turbine of figure 2 is similar to the gas turbine of figure 1 and, in addition, is provided with a system 19 to regulate the pressure within the gas turbine.

The system 19 to regulate the pressure has piping 20 connected to a sucker 21 (e.g. a fan, or blower or compressor). e.g. the sucker can discharge the sucked gas from the inside of the compressor 5 into the atmosphere. As an alternative, piping 22 can also be provided connected between the sucker 21 and air intake 4, for the sucker 21 to supply the gas into the air intake 4. The sucker 21 can also be a reversible sucker, such that the flow can be reverted.

Advantageously, the piping 20 is connected to the compressor 5 between the variable inlet guide vanes 6 and the combustion chamber; more preferably at a location close to the variable inlet guide vanes 6.

During operation air is fed to the compressor 5 through the filter 2 and air intake 4; this air is compressed and supplied to the combustion chamber 7 where a fuel is combusted using the compressed air as the oxidizer; the combustion generates hot gas that is expanded in the turbine 8 and is then discharged via the exhaust duct 9 and stack 10.

In addition, during operation air is extracted from the extraction slot 12a and is supplied via the piping 12 to the combustion chamber 7 and/or turbine 8 for cooling and/or sealing.

When the gas turbine is shut down (e.g. because of a low energy request from the electric grid), the gas turbine naturally cools down.

In a first period (e.g. one hour) after the shut down start, preferably no actions to prevent the gas turbine cooling are implemented. In fact the gas turbine is hot and a limited cooling can be accepted.

Then the method for controlling the temperature of the gas turbine is implemented. The starting of the implementation of the method can be triggered by elapsing of a given time from the beginning of the shut down or from reaching of a given temperature at one nor more of the reference locations.

The method includes withdrawing gas (e.g. air because there is no combustion in the combustion chamber 7) from the gas turbine (e.g. from the exhaust duct 9 and/or heat recovery steam generator, if provided) via the piping 13, heating the gas in the heater 17, supplying the gas back into the gas turbine.

Advantageously, the temperature of at least a reference location within the gas turbine is monitored and at least a gas feature is controlled according to the measured temperature.

The reference location can be any. E.g. the reference location can be one or more components or parts of the combustion chamber 7 or turbine 8 or even compressor 5; in this case the temperature can be monitored using temperature sensors that can be connected to the components or parts.

The reference position can also be an area within the combustion chamber, such that its temperature is the temperature of the gas in that area; for example the reference position can be a position upstream and/or downstream of the compressor and/or downstream of the combustion chamber 7 and/or downstream of the turbine 8; in this case the temperature can be monitored using temperature sensors such as thermocouples.

Naturally the reference positions cited above are only examples and it is clear that the reference position can be one or more of those indicated above or even other reference positions not specifically indicated could be used according to the needs.

In addition, even if the temperature at more than one reference position is monitored, the control of the gas features can be done on the basis of the temperature of one or more of the reference positions, i.e. the temperature at all the reference positions or only a part thereof can be used for controlling the gas features.

The at least a gas feature includes at least one among: temperature, pressure, mass flow.

When the temperature is the controlled feature, the heater 17 can be regulated according to the monitored temperature in order to have the desired temperature for the recirculated gas.

When the pressure is the controlled feature, the fan or blower or compressor 16 and/or valve 14 can be regulated according to the monitored temperature in order to have the desired mass flow for the recirculated gas to influence (e.g. to reach or maintain) the desired temperature at the reference location.

When the mass flow is the controlled feature, the fan or blower or compressor 16 can be regulated according to the monitored temperature in order to have the desired mass flow for the recirculated gas to influence (e.g. to reach or maintain) the desired temperature at the reference location.

Withdrawing gas from the gas turbine preferably comprises withdrawing gas from the combustion chamber 7 and/or turbine 8 and/or exhaust duct 9 and supplying the gas back into the gas turbine preferably comprises supplying the gas into the compressor 5; in addition, the gas is preferably fed to one of the last five stages of the compressor 5 and more preferably one of the last three stages of the compressor 5.

The method allows to control the temperature of the gas turbine with a reduced energy consumption. In particular the method allows to control the temperature of one or more reference locations of the gas turbine 1 with a reduced energy consumption.

In fact, hot gas is made to pass through the gas turbine or a portion thereof, so counteracting the gas turbine cooling. In addition, since the features of the gas that is made to pass through the gas turbine are controlled on the basis of the temperature of reference locations, the features of the gas passing through the gas turbine can be optimized in order to maintain or control the temperature at those locations with the lowest energy consumption. For example, as reference location one or more of the following locations can be selected:
- reference locations on components that are most stressed by the thermal cycles caused by starts up/shuts down;
- reference locations in correspondence of locations that are also used as reference to evaluate the lifetime expenditure during start up/shuts down;
- etc.

By using this method, the temperature of the gas moving out of the heater 17 can be optimized on the basis of the requirements at the reference locations.

In addition, the mass flow of the gas passing through the gas turbine or a part thereof can also be regulated, in order to affect the temperature at the reference locations, in order to optimize (in terms of reduction) the energy consumption deriving from the heating at the heater 17 and fan or blower or compressor 16.

The method can be further improved by controlling the gas features by controlling the pressure within the gas turbine. This can e.g. be done by using the system 19. The control of the gas features is done by counteracting cold air from entering the compressor 5 and/or influencing the pressure within the compressor 5 to assist or counteract gas entrance into the compressor 5 from the piping 13.

Preferably, the pressure within the gas turbine is controlled at a position at the entrance of the compressor 5. This kind of control gives the advantage of preventing cold air from entering the compressor 5 and mixing with the gas from the piping 13; this way the energy consumption is further reduced.

The pressure within the gas turbine is preferably controlled by sucking gas; this kind of control allows influencing the pressure within the compressor 5 to assist or counteract gas entrance into the compressor 5 from the piping 13.

In addition, preferably at least a part (but preferably all) of the sucked gas is supplied back into the gas turbine. In a preferred embodiment, gas is sucked from a first zone 25 facing the variable inlet guide vanes 6 and is supplied back into the gas turbine to a second zone 26 facing the variable inlet guide vanes 6; in addition the first zone 25 and the second zone 26 are at opposite sides of the variable inlet guide vanes 6. This embodiment allows the recirculation of air through the variable inlet guide vanes 6, in order to prevent cold air entrance into the compressor 5. Also circulation opposite to this describe above is naturally possible. E.g. the first zone 25 can be located between the variable inlet guide vanes 6 and the combustion chamber 7.

Thus, for example, sucking can be done at the first zone 25 and the sucked gas can be supplied back into the gas turbine at second zone 26 or can be discharged into the atmosphere, or sucking can be done at second zone 26 and the sucked gas can be supplied back into the gas turbine at first zone 25.

Thus the system 19 allows pressure regulation and e.g. prevents air entrance from the atmosphere into the gas turbine 1 and/or according to the design can prevent hot gas flow from the injection point of the gas from the piping 13 back to the variable inlet guide vanes 6.

It is clear that, even if the preferred embodiments described above have the system 19 at the compressor 5 and preferably at the variable inlet guide vanes 6, similar systems can be provided at the exhaust duct 9 and/or heat recovery steam generator and/or stack 10.

Naturally the features described may be independently provided from one another.

### REFERENCE NUMBERS

- 1: gas turbine
- 2: filter
- 3: shutter
- 4: air intake
- 5: compressor
- 6: variable inlet guide vanes
- 7: combustion chamber
- 8: turbine
- 9: exhaust duct
- 10: stack
- 11: shutter
- 12: piping
- 12a: extraction slot
- 13: piping
- 14: valve
- 15: valve
- 16: fan or blower or compressor
- 17: heater
- 19: system to regulate the pressure
- 20: piping
- 21: sucker
- 22: piping
- 25: first zone
- 26: second zone

## Claims

1. A method for controlling the temperature of a gas turbine (1) during a shutdown, the method comprising withdrawing gas from the gas turbine (1),
heating the gas,
supplying the gas back into the gas turbine (1), **characterised by**
monitoring the temperature of at least a reference location within the gas turbine (1),
controlling at least a gas feature according to the measured temperature.

2. The method of claim 1, **characterized in that** the at least a gas feature includes at least one among: temperature, pressure, mass flow.

3. The method of claim 1, **characterized in that** withdrawing gas from the gas turbine (1) comprises withdrawing gas from the combustion chamber (7) and/or turbine (8) and/or exhaust duct (9).

4. The method of claim 1, **characterized in that** supplying the gas back into the gas turbine (1) comprises supplying the gas into the compressor (5).

5. The method of claim 4, **characterized in that** supplying the gas into the compressor (5) comprises supplying the gas to one of the last five stages of the compressor (5) and preferably one of the last three stages of the compressor (5).

6. The method of claim 1 or 2, **characterized by** controlling the gas features by controlling the pressure within the gas turbine (1).

7. The method of claim 6, **characterized by** controlling the pressure within the gas turbine (1) at a position at the entrance of the compressor (5).

8. The method of claim 7, **characterized by** controlling the pressure within the gas turbine (1) by sucking gas.

9. The method of claim 8, **characterized by** supplying at least a part of the sucked gas back into the gas turbine (1).

10. The method of claim 9, **characterized by** sucking gas from a first zone (25) facing variable inlet guide vanes (6), and
supplying at least a part of the sucked gas back into the gas turbine (1) to a second zone (26) facing the variable inlet guide vanes (6),
the first zone (25) and the second zone (26) being at opposite sides of the variable inlet guide vanes (6).

11. The method of claim 9, **characterized by** sucking gas from a second zone (26) facing variable inlet guide vanes (6), and
supplying at least a part of the sucked gas back into the gas turbine (1) to a first zone (25) facing the variable inlet guide vanes (6),
the first zone (25) and the second zone (26) being at opposite sides of the variable inlet guide vanes (6).

12. The method of claim 10 or 11, **characterized in that** the first zone (25) is located between the variable inlet guide vanes (6) and the combustion chamber (7).

13. The method of claim 1, **characterized by** controlling the gas features after a given time from the start of the shutdown.
